# EUROPÄISCHE PATENTANMELDUNG

(11) **EP 1 731 415 A1**
(43) Veröffentlichungstag der Anmeldung: **13.12.2006**
(21) Anmeldenummer: 05007392.3
(22) Anmeldetag: 11.06.2005
(51) Int. Cl.: B62M 3/00

(54) **Tretkurbelantrieb für Fahrräder**

(71) Anmelder: Seyfried, Hans-Jürgen, 91639 Wolframs-Eschenbach (DE)
(72) Erfinder: Seyfried, Hans-Jürgen, 91639 Wolframs-Eschenbach (DE)

(57) **Zusammenfassung**

Bei dem H.J.S. System wird die menschliche Kraft, die bis heute immer vom Pedal auf die Tretachse gelenkt wurde, dadurch abgekürzt, indem die Kraft jetzt vom Pedal über den Tretarm direkt auf den Zahnkranz gelegt wird (siehe Zeichnung) Durch den als V gebildeten Tretarm ist gleichzeitig auch noch der immer etwas störende 0 Punkt aufgehoben. Durch diese Kraftübertrangung ergibt sich eine erhebliche Erleichterung.

## Beschreibung

Die herkömmliche Bauweise des Tretlagers geht mit dem Pedalarm direkt auf die Achse des Tretlagers von dem aus wieder der Zahnkranz angetrieben wird..

Die von mir konstruierte Version geht vom Pedal direkt über einen V-förmigen Tretarm auf den Zahnkranz und braucht dadurch weniger Kraft für selbe Leistung. Begleiteffekt ist auch gleich noch die Überwindung des Null oder Totpunktes.

In der Konstruktion würde sich nicht viel ändern, man hätte nur rechts und links eine Scheibe, mit aufgesetztem Zahnkranz rechts. Oder aber geht man mit dem V-förmigen Tretarm direkt auf den Zahnkranz evtl. mittels Stehbolzen. Die 1. Version mit Scheibe wäre sicher für Tourenräder besser geeignet da hier auch ein Kettenschutz erwartet wird.

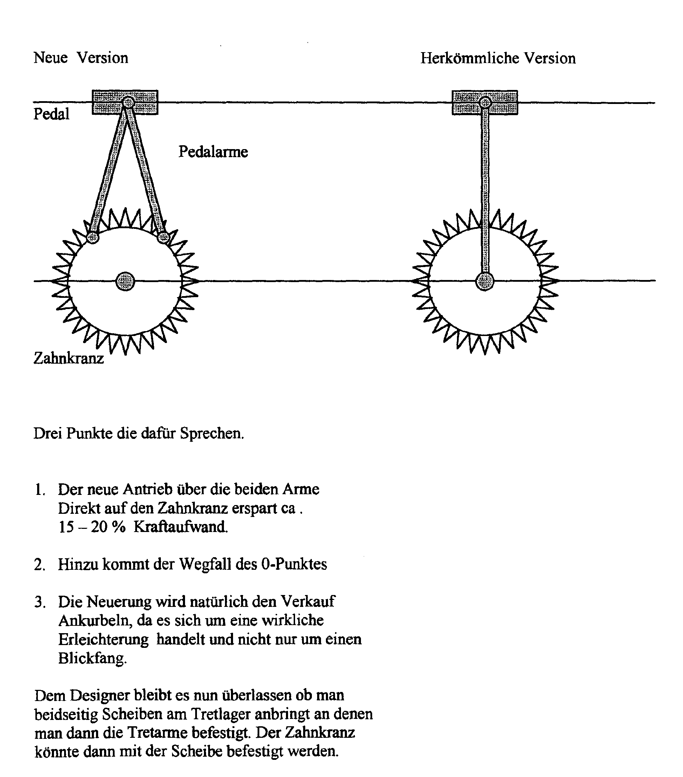

## Patentansprüche

1. Die weltweit verbreitete Antriebsart bei Fahrraedern ist, das der Tretarm mit Pedal direkt auf der Tretlagerachse sitzt neben dem Zahnkranz ueber den die Kette laeuft. Die Kraft des Tretarmes geht also direkt auf die Mittelachse.

2. Beim H.J.S. SYSTEM ist der Tretarm mit Pedal ein umgedrehtes V (bzw.ein volles Dreieck) auf dessen Spitze das Pedal sitzt. Die beiden Schenkel laufen nicht zur Mittelachse sondern sind am Aussenrand des Zahnkranzes befestigt. Dadurch bedingt ergibt sich eine Erleichterung beim Tretvorgang. Die Kraft tritt genau dort auf wo sie benoetigt wird, an der Kette. Die Kraft zieht praktisch die Kette ueber den Zahnkranz. Hinzu kommt ein -sideeffect- denn es gibt den sogenannten Totpunkt nicht mehr, der wird durch das V aufgehoben. Die beiden (bzw. 4) Arme uebertragen die Kraft gleichmaessiger. Einzigste Aendenmg ist, man benoetigt auf der gegenueber - liegenden Seite des Zahnkranzes eine Scheibe statt des Zahnkranzes oder den selben Kranz ohne Verzahnung.
Patentanspruch bezieht sich also auf die hier beschriebene H.J.S System Version.
